# EUROPEAN PATENT APPLICATION

(11) **EP 4 718 903 A1**
(43) Date of publication of application: **01.04.2026**
(21) Application number: 24383046.0
(22) Date of filing: 30.09.2024
(51) Int. Cl.: H04W 24/02, G06N 3/08, G06N 20/00, H04L 41/16, H04W 8/22

(54) **IMPROVING UE TO BASE STATION COMMUNICATION WITH AI**

(71) Applicant: Vodafone Group Services Limited, Newbury RG14 2FN (GB)
(72) Inventor: MARTINS, Diogo, London, W2 6BY (GB); DIAZ, Diego Armando, London, W2 6BY (GB); ESPERANZA ALCAZAR, Maria, London W2 6BY (GB)
(74) Representative: Boult Wade Tennant LLP

(57) **Abstract**

Method and system for managing communications between user equipment, UE, and a base station, the method comprising obtaining data describing operational conditions during communications between the UE and the base station. A machine learning, ML, model generating a set one or more suggested changes in operating parameters between the UE and the base station based on the data describing the operational conditions. The base station receiving data describing the set of suggested changes in operating parameters. The base station implementing at least one of the set of suggested changes in operating parameters by configuring the UE according to the at least one of the set of suggested changes in operating parameters.

## Description

### Field of the Invention

The present invention relates to a system and method for managing communications between base stations and user equipment, UE. In particular, the method and system use machine learning to provide improved or optimised UEAssistancelnformation (UAI) messages so that more optimal communications can be provided for a particular situation.

### Background of the Invention

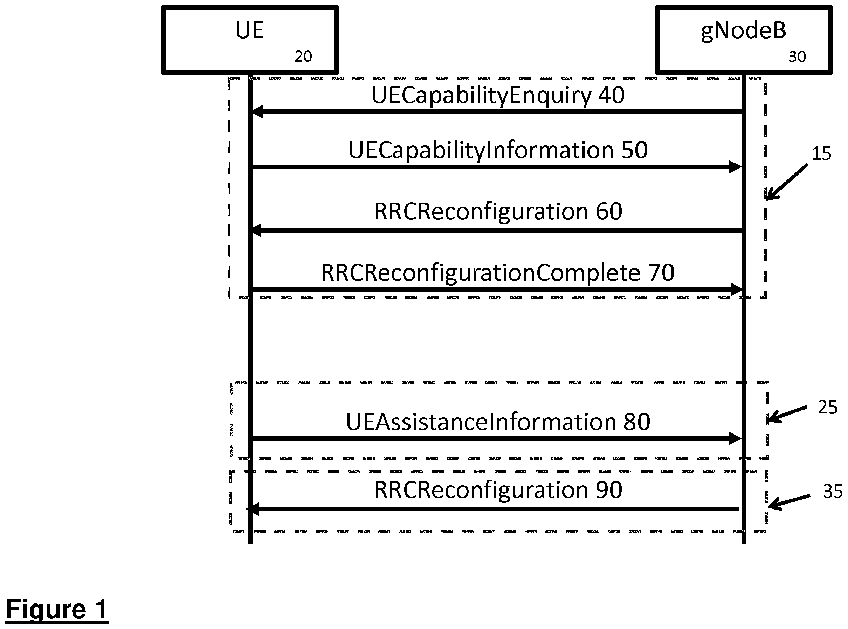

3GPP Release 16 describes a procedure for determining the capabilities of a UE that will be served by a base station. This is illustrated in Figure 1. The base station (gNodeB) 30 issues a UECapabilityEnquiry message 40 to a UE 20. The UE 20 responds with a UECapabilitylnformation message 50. The UE 20 may indicate with the UECapabilitylnformation message 50 that is can be reconfigured in certain ways and that it is compliant with Release 16 capabilities. This is also illustrated in Figure 1 with the base station 30 issuing a RRCReconfiguration message 60 to the UE 20. The UE 20 confirms successful reconfiguration by responding with a RRCReconfiguraitonComplete message 70. In this way, the base station 30 may implement changes in configuration of the UE 20, which affect communications between the UE 20 and the base station 30. This procedure is illustrated by dotted line 15 in Figure 1.

Release 16 also provided a procedure for the UE 20 to request certain changes in parameters for communicating with the base station 30 (e.g., reducing a number of MIMO layers to save power or reduce overheating). The UE 20 makes such a request 25 by issuing a UEAssistancelnformation (UAI) message 80 to the base station 30. The procedure 35 for the base station meeting this request (e.g., shutting down some transmit and receive antennas) is for the base station 30 to send the UE 20 a RRCReconfiguration message 90. This requires the UE 20 to be compliant with the Release 16 requirements, as described above.

Whilst such functionality can be useful during different situations (e.g., when the UE 20 is overheating and/or has a low battery), the above-mentioned procedures are rarely used as it can be difficult for the UE 20 to reliably request appropriate changes to its operating parameters. Therefore, such functionality can be underused, even when benefits could be achieved. This leads to inefficiencies in network operation.

Therefore, there is required a method and system that overcomes these problems.

### Summary of the Invention

Data are collected from operating or operational conditions when user equipment (UE) and a base station or gNodeB are communicating. Data from many different types of operational conditions may be obtained and collected. Different UEs and/or base stations may collect different data types entities may collect the same data.

The operational conditions may relate to operations within the UE or other aspects. In an example implementation, this could include data describing how a user is using the UE when the UE communicates with the base station, the load on the UE hardware (e.g., memory usage, CPU utilisation, screen brightness, etc.), attributes of the base station (e.g., load, number of UEs served, bandwidth use, etc.), and/or a combination of both. Other types of data may be considered and obtained.

A machine learning (ML) model receives, processes, and/or ingests the collected operational conditions data and uses this to suggest changes to operating parameters of the radio link, hardware, and/or software used to provide communications with the UE. The ML model may determine that no changes are required based on current operating conditions. However, a situation may change or an event may occur (e.g., the UE overheats or the user changes how they are using their UE) that results in the ML model suggesting a change. Once the ML model has suggested a change in operating parameters (e.g., a number MIMO layers to use), these one or more suggested changes are sent to the base station. The base station typically controls how and when any changes are applied even when the UE requests them. The ML model may operate within the UE, within the base station, within a server external to the UE, or elsewhere in the network.

The base station can implement one or more of the suggested changes in operating parameters. The base station may determine that none of the suggested changes should be implemented, that a subset of the suggested changes should be implemented, or that all suggested changes are implemented or applied. Such a decision may be based on criteria, rules, instructions, or other data (e.g., static or dynamic). For example, the base station may be restricted from making certain changes under certain circumstances (e.g., when loads are high or beyond a particular threshold, at certain times of day, and/or based on different traffic types). However, when the base station implements at least one of the suggested changes (e.g., in a set of suggested changes), the UE is configured or reconfigured according to the suggested change or changes. This may be achieved by issuing a RRCReconfiguration request message or by using another mechanism. Therefore, more optimised performance may be achieved, such as improved bandwidth or power usage, for example.

Whilst the changes in operating parameters are described as being suggested or recommended by the ML model, the system and method may operate by implementing any or all of the changes provided as an output by the ML model. In this case, the changes in operating parameters are simply provided as an output in a suitable format and directed, transmitted, or sent to the base station (or base stations) in the same or a different format enabling the base station to implement the changes.

In accordance with a first aspect there is provided a method for managing communications between user equipment, UE, and a base station, the method comprising the steps of:
obtaining data describing operational conditions during communications between the UE and the base station;
a machine learning, ML, model generating a set of one or more suggested changes in operating parameters between the UE and the base station based on the data describing the operational conditions;
the base station receiving data describing the set of suggested changes in operating parameters; and
the base station implementing at least one of the set of suggested changes in operating parameters by configuring the UE according to the at least one of the set of suggested changes in operating parameters. Therefore, more optimal settings and parameters can be applied to the communications link between the UE and base station for the current use of the UE (e.g., a device such as smartphone or tablet computer). The base station may be a gNodeB. The base station may implement any one or more of the set of suggested changes in operating parameters. The base station may also determine that some of the suggested changes in parameters should be implemented or that one or more may be implemented at a future time (e.g., apply a delay to the application of any of the suggested changes). This may be to balance the requirements of different UEs, for example.

Preferably, the at least one of the set of suggested changes in operating parameters may be sent to the base station as one or more UEAssistancelnformation message. Other message types or transmission mechanisms may be used. However, especially when the suggested changes or amendments in operating parameters are sent directly from the UE, then it may be convenient to use this message type. As this is a standard message then little customisation will be required.

Optionally, the method may further comprise the steps of:
before the at least one of the set of suggested changes in operating parameters is sent to the base station the base station sending the UE a request for UE capability information; and
the UE responding to the request with a response indicating capabilities of the UE, wherein the capability information includes one or more capabilities of the UE to alter the operating parameters. Therefore, the base station can become aware of which UEs it is serving that can take advantage of functionality enabling their parameters to be changed, as described. The request and response are preferably in the form of UECapabilityEnquiry and UECapabilitylnformation messages, respectively. This can occur at any time before the base station receives suggested changes in operating parameters but preferably when the UE first communicates with the base station.

Optionally, the step of the base station implementing the at least one of the suggested set of changes in operating parameters may further comprise the step of the base station sending the UE a radio resource control, RRC, message (e.g., a RRCReconfiguration message) describing the at least one of the set of suggested changes in operating parameters. Other message types may be used.

Optionally, the at least one of the set of suggested changes in operating parameters may include any one or more of: number of multi input multi output, MIMO, layers; and the number of UE receivers in operation. Other changes in parameters or attributes may be suggested.

Optionally, the data describing the operational conditions may include any one or more of: radio performance, screen use, user behaviour, mobile application executing, traffic pattern, CPU usage, memory usage, call information, and streaming data type. Other types of data may be included.

Optionally, the set of suggested changes in operating parameters may be sent to the base station in response to the ML model determining that a change is required. Therefore, the ML model may determine suggested changes and when such changes should be applied.

Optionally, the method may further comprise the step of:
updating the ML model by providing the at least one of the set of suggested changes in operating parameters to the ML model and further operational conditions after the base station implements the at least one of the set of suggested changes in operating parameters. Therefore, ML model can be improved based on previous suggested changes and their recorded outcomes on the performance of the communications between one or more UEs and one or more base stations. The ML model may be for a single UE (that may use a plurality of base stations), a single base station (serving a plurality of UEs), or for a wider telecommunications network including a plurality of base stations and a plurality of U Es.

Optionally, the method may further comprise the step of iterating the steps of:
obtaining the data describing the operational conditions, the ML model generating the set of suggested changes in operating parameters, the base station receiving data describing the set of suggested changes in the operating parameters, and the base station implementing the at least one of the set of suggested changes in operating parameters. Therefore, ongoing improvements or optimisations may be provided as operating conditions change.

Optionally, the ML model may be stored and/or updated within the UE; or
the ML model may be stored and/or updated in a server external to the UE. The location of the ML model may be in any convenient place or component of the telecommunications network, such as an over the top (OTT) server or other server type.

Optionally, the UE or the server external to the UE may obtain the data describing the operational conditions. There can be different sources of operational condition data acquired from different components of the telecommunications network.

Optionally, the ML model may be any one of: deep learning, reinforced or unreinforced machine learning, neural network, K-means clustering, or regression analysis. Other ML or artificial intelligence (Al) model or component may be used.

According to a second aspect, there is provided user equipment (UE) comprising:
a processor; and
   memory storing computer-executable instructions that, when executed by the processor, cause the UE to:
   obtain data describing operational conditions during communications between the UE and a base station;
   send the data to a machine learning, ML, model to generate a set of one or more suggested changes in operating parameters between the UE and the base station based on the data describing the operational conditions;
   sending the set of suggested changes in operating parameters to the base station; and
   receiving from the base station a message configuring the UE according to the at least one of the set suggested changes in operating parameters. In this example, the ML model is operated and stored within the UE.

According to a third aspect, there is provided a server comprising:
a processor; and
memory storing computer-executable instructions that, when executed by the processor, cause the server to:
receive data describing operational conditions during communications between user equipment, UE, and a base station;
use a machine learning, ML, model to generate a set of one ore more suggested changes in operating parameters between the UE and the base station based on the data describing the operational conditions; and
send data to the base station describing the set of suggested changes in the operating parameters. In this example, the ML model may be operated and stored within the server or the ML model may be in data communication with the server (e.g., in a virtual server or database). The ML model may send the set of suggested changes from the server using one or more UEAssistancelnformation messages, for example.

Optionally, the computer-executable instructions may further cause the processor to:
update the ML model by providing the at least one of the set of suggested changes in operating parameters to the ML model and further operational conditions after the base station implements the at least one of the set of suggested changes in operating parameters.

According to a fourth aspect, there is provided a telecommunications system comprising:
a base station; and
one or more UE described above and/or the server described above. The telecommunications system may be a 5G or 6G (or any other technology type) telecommunications system, for example.

In accordance with a further aspect there is provided a method for managing communications between user equipment, UE, and a base station, the method comprising the steps of:
obtaining data describing operational conditions during communications between the UE and the base station;
a machine learning, ML, model generating a set of at least one change in operating parameters between the UE and the base station based on the data describing the operational conditions;
the base station receiving data describing the set of changes in operating parameters; and
the base station implementing at least one of the set of changes in operating parameters by configuring the UE according to the at least one of the set changes in operating parameters.

In accordance with a further aspect, there is provided user equipment (UE) comprising:
a processor; and
memory storing computer-executable instructions that, when executed by the processor, cause the UE to:
obtain data describing operational conditions during communications between the UE and a base station;
send the data to a machine learning, ML, model to generate a set of at least one change in operating parameters between the UE and the base station based on the data describing the operational conditions;
sending the set of changes in operating parameters to the base station; and
receiving from the base station a message configuring the UE according to the at least one of the set of changes in operating parameters.

In accordance with a further aspect, there is provided a server comprising:
a processor; and
memory storing computer-executable instructions that, when executed by the processor, cause the server to:
receive data describing operational conditions during communications between user equipment, UE, and a base station;
use a machine learning, ML, model to generate a set of at least one change in operating parameters between the UE and the base station based on the data describing the operational conditions; and
send data to the base station describing the set of changes in the operating parameters.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a sequence diagram of messaging between user equipment (UE) and a base station;
FIG. 2 shows a schematic diagram of a machine learning (ML) system;
FIG. 3 shows a schematic diagram of a method and system for managing communications between the UE and the base station;
FIG. 4 shows a flowchart of the method for managing communications between the UE and the base station; and
FIG. 5 shows a schematic diagram of a computer system used to implement the methods of Figures 3 and 4.

It should be noted that the figures are illustrated for simplicity and are not necessarily drawn to scale. Like features are provided with the same reference numerals.

### Detailed description of the preferred embodiments

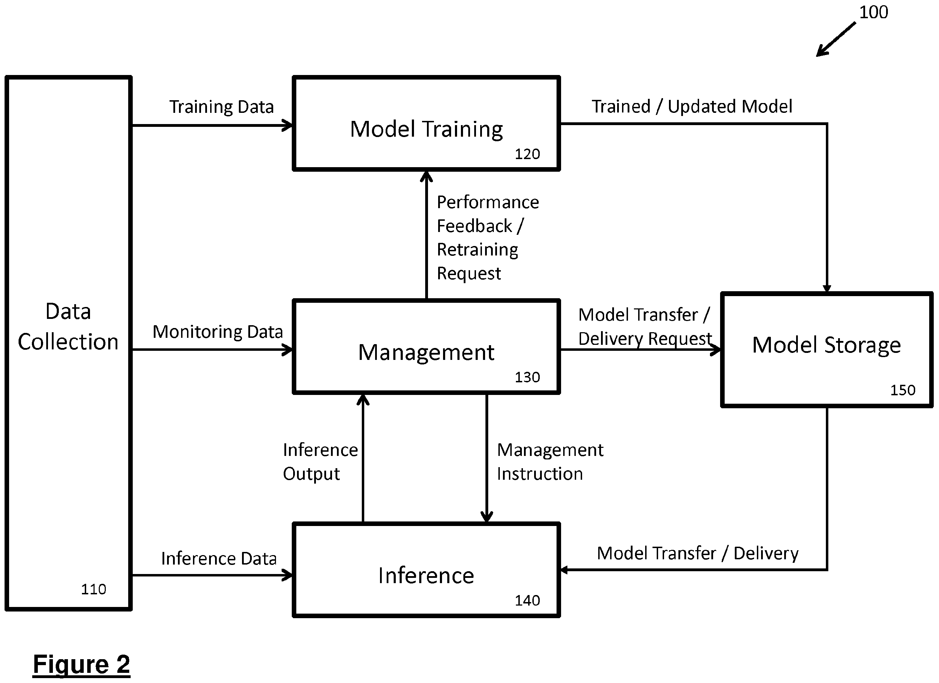

In Release 18, 3GPP initiated a study item related to the introduction of a framework that uses Artificial Intelligence (Al) and/or Machine Learning (ML) algorithms applied to the air interface, tackling different use cases. The use cases were picked for both study purposes but also to establish lifecycle management (LCM), where the actions of generation, training, updating an AI/ML model are detailed considering the different actors of a radio access network (RAN) network. The LCM 100 as agreed in 3GPP is shown in Figure 2. Data collection component 110 provides training data, monitoring data and inference data to the processing components: model training 120, management, and inference, respectively. The processing components provide process data to the model storage component 150.

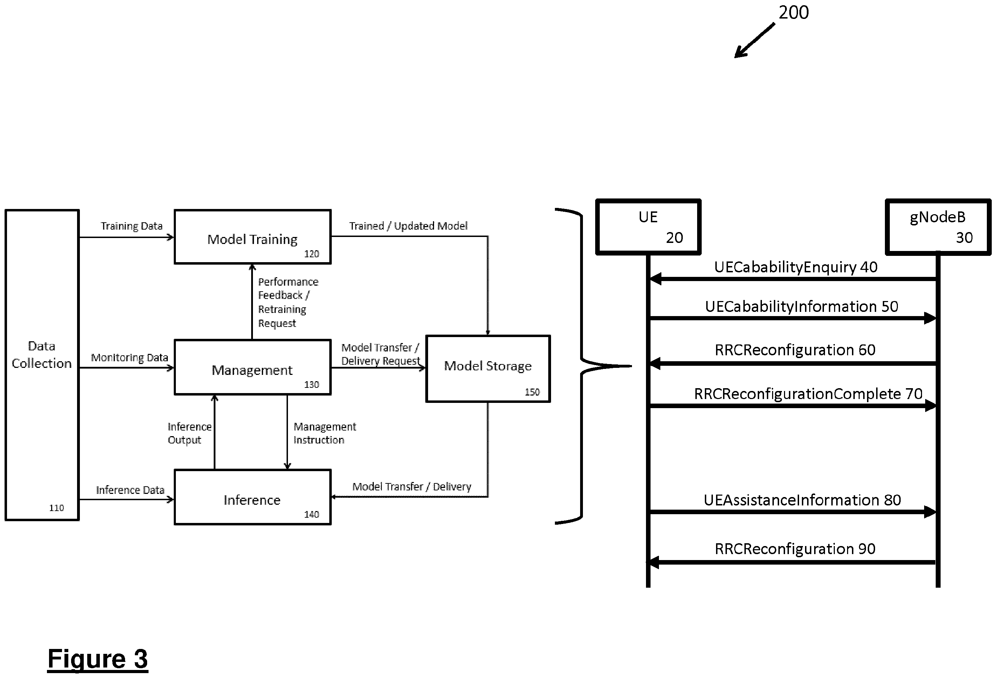

In the present system and method, the LCM 100 may be trained using operational conditions and operating parameter related to the operation of a UE 20 when communicating with a base station 30. In particular, the LCM 100 or ML model may be used to generate suggested changes in operating parameters of the UE 20 and/or base station 30. These suggestions are applied (in part or entirely) by the base station 30 by sending an RRCReconfiguration 60 to the UE 20, as shown schematically in the system 200 of Figure 3. Other ML or Al model architectures may be used.

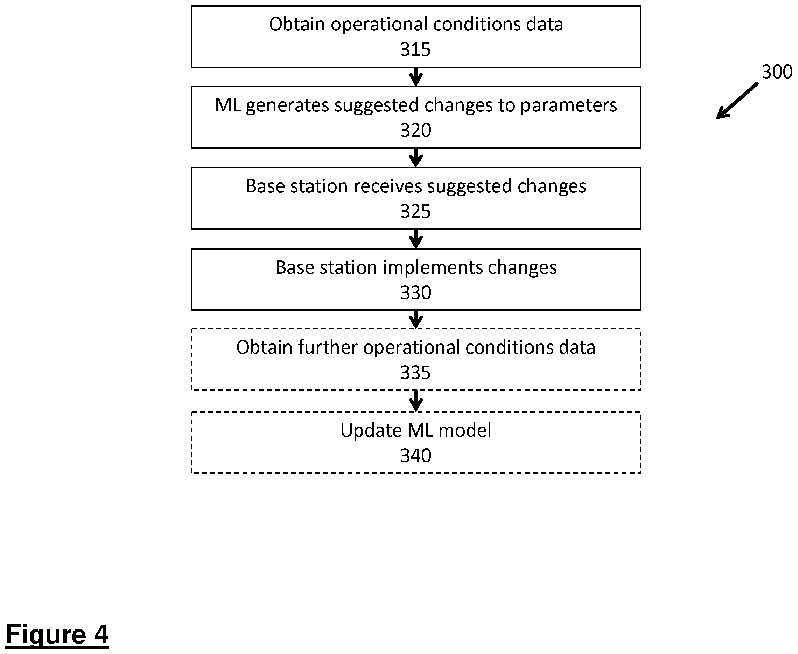

The method 300 is shown as a flowchart in Figure 4. This figure illustrates the method at a high level. Optional features are shown as dashed lines in this figure.

At step 315, operational conditions data are obtained. These operational conditions may be derived directly (e.g., from measurements) or inferred indirectly (e.g., based on other observations). The UE 20, the base station 30, one or more network components or a combination of any of these may obtain and collect the operational conditions data. The operational conditions may be any attribute or aspect of the devices or component operating to provide communications between the UE 20 and the base station 30. Operational conditions may describe hardware and/or software. For example, the operational conditions may include how a UE 20 (e.g., cell phone, smartphone, tablet computer, computer, device, or any other item using wireless or cellular communications) is operating, such as its screen use, CPU usage, memory usage, applications running (in foreground and/or background), battery level or health or any other condition. Other operational conditions (e.g., parameters of the radio link) may be included.

The obtained operational conditions are provided to an ML (or Al) model. At step 320, the ML model generates suggested changes to operating parameters based on the ingested operational conditions. The operational conditions may change with time. At some times, the ML model may determine that no changes to operating parameters are required. At other times in in different situations, the ML model may determine that more optimal operating parameters are required and provide an output of data indicating changes to operating parameters that should be made. In one example implementation, a change to operating parameters may be to change the number of multi in multi out (MIMO) layers that should operate between a particular UE 20 and its serving base station 30. Using more MIMO layers improves latency and throughput at the expense of battery power and system resources.

The base station 30 receives the data indicating the suggested changes to the operating parameters from the ML model at step 325. These data may be transmitted to the base station 30 in a suitable format (e.g., as a UEAssistancelnformation message 80). The base station 30 may receive a set of suggested changes in parameters containing one or more suggested change. The base station can implement any, all or none of the suggested changes (e.g., as it receives separate UEAssistancelnformation messages). As an optional step, the base station 30 may select which of the proposed or suggested changes in operating parameters to implement. This decision may be based on stored data at the base station 30, which may be the same or different for each base station 30. Alternatively, the base station 30 may make the decision based on further dynamic data obtained by the base station 30 from other sources. Therefore, it may be up to the base station 30 whether to implement any of the suggested changes. Different vendors of hardware may implement the suggested changes in different ways, for example. The base station implements one or more of the set of suggested changes at step 330. For example, this may be by sending a RRCReconfiguration message 90 to the UE 20.

In an example implementation, the ML model (e.g., within or external to the UE 20) may learn base station behaviour upon receiving the suggested changes to parameters, including how and if the individual base stations implement the suggested changes to parameters. Based on this learnt behaviour, the ML model can further adapt how it generates future suggested changes to operating parameters.

After the one or more change have been implemented, further operational conditions data may be collected at set 335. The changes that were made (e.g., after the base station 30 selected which ones to implement) together with the further operational conditions data collected under the new configuration, may be passed to the ML model at step 340. This can allow the ML model to learn whether the implemented changes were successful and/or improve the communications between the UE 20 and the base station 30.

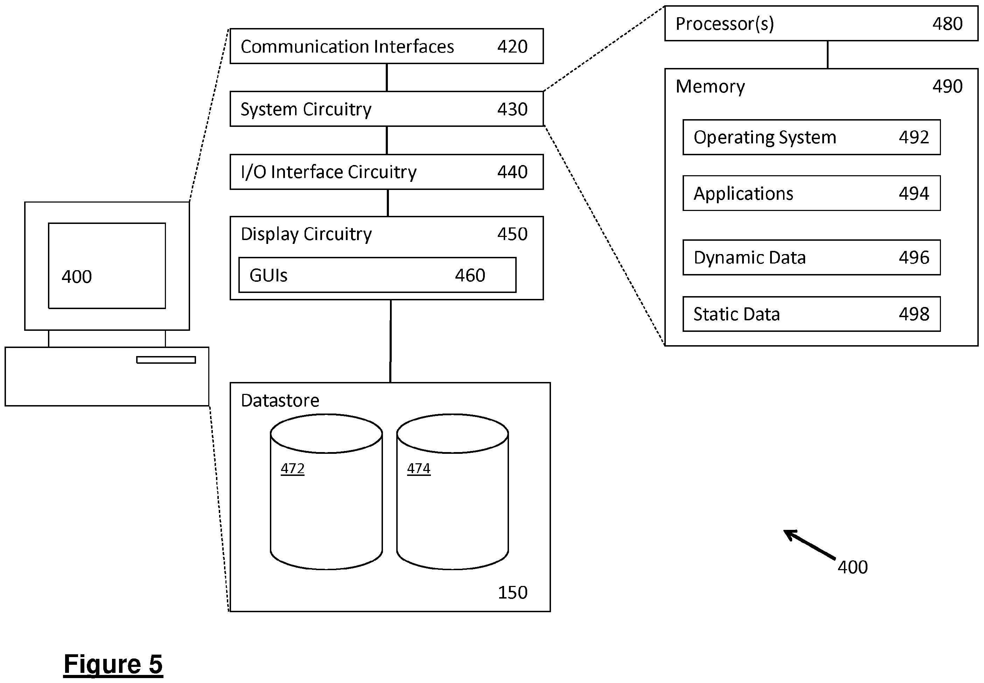

The method 300 may be implemented within a computer system 400. As shown in Figure 5, the computer system 400 includes a number of components including communication interfaces 420, system circuitry 430, input/output (I/O) circuitry 440, display circuitry and interfaces 450, and a datastore (model storage) 150. The system circuitry 420 can include one or more processors or CPUs 480 and memory 490. The system circuitry 430 may include any combination of hardware, software, firmware, and/or other circuitry. The system circuitry 430 may be implemented, with one or more systems on a chip (SoC), application specific integrated circuits (ASIC), microprocessors, and/or analogue and digital circuits.

The display circuitry may provide one or more graphical user interfaces (GUIs) 460 and the I/O interface circuitry 440 may include touch sensitive or non-touch displays, sound, voice or other recognition inputs, buttons, switches, speakers, sounders, and other user interface elements. The I/O interface circuitry 440 may include microphones, cameras, headset and microphone input /output connectors, Universal Serial Bus (USB) connectors, and SD or other memory card sockets. The I/O interface circuitry 440 may further include data media interfaces (e.g., a CD-ROM or DVD drive) and other bus and display interfaces.

The memory 490 may include volatile (RAM) or non-volatile memory (e.g., ROM or Flash memory). The memory may store the operating system 492 of the computer system 400, applications or software 494, dynamic data 496, and/or static data 498. The datastore or data source (model storage) 150 may include one or more databases 472, 474 and/or a file store or file system, for example.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

The ML model may be trained on sample or historic operational conditions data and corresponding operating parameters of the telecommunications network (e.g., training data). The ML model may also evolve based on ingesting current data and outcomes and so may improve or evolve with time for a particular telecommunications network. In some implementations (e.g., when the ML model operates within the UE 20), the model may be static or fixed to reduce system resource use. Different types of operational data may be collected and ingested by the ML model. These different data types may allow the ML model to generate different types of suggested changes to operating parameters of the telecommunications network. For example, network recovery and network search data may be obtained. Information about real-time network congestion may be included in the collected operational data. This may allow the ML or AI model to dynamically adjust network selection and optimise performance based on current conditions. Data relevant to device (UE 20) antenna tuning may be provided. The network could share real-time or pre-generated maps of signal interference in an area served by one or more base stations. This may include information about sources of interference like buildings, other cell towers, or specific frequencies. Together with real-time signal strength data from the network, the ML model could dynamically adjust antenna power based on distance and network load.

The ML model may also be trained using sources of UE assistance information (UAI) and/or network parameters tuned or aimed at (e.g., manually) reducing the mobile battery consumption by adapting to different traffic patterns or users. For example, these data could include:

### Context-aware DRX Optimization (and similarly with Inactive State):

The ML model may analyse user behaviour, network traffic patterns, and application demands forming at least part of the operational conditions data. Based on this analysis, it can dynamically adjust DRX parameters (how often the phone listens for signals) using UAI messages.

For low-traffic situations (e.g., background music streaming), the ML model can increase DRX inactivity period, reducing battery drain. During high-traffic periods (e.g., during a video call), the ML model may adjust DRX for faster response times, balancing battery life with performance. Data describing the current use or application operating on the UE 20 may be included in the operational conditions data provided to the ML model.

### Adaptive Bandwidth Management:

The ML model may analyse content being downloaded or streamed (video resolution, image size, etc.) forming at least part of the operational conditions data and adjust the maximum aggregated bandwidth reported in UAI messages.

For low-resolution content, the ML model may request as the suggested changes in operation parameters a lower bandwidth, reducing power consumption for data transfer.

For high-resolution content, the ML model can prioritise faster download speeds (by suggesting appropriate changes to the operating parameters), even if it means slightly higher battery usage.

### Carrier Aggregation Optimization:

The ML model can analyse network conditions forming at least part of the operational conditions data, and adjust the maximum number of secondary component carriers (channels) reported or outputted as UAI messages.

In areas with strong signal strength, the ML model can limit used carriers, reducing power needed for managing multiple channels.

In weak signal areas, the ML model can maximize carriers to improve reception, even if it means slightly higher battery usage.

### Dynamic MIMO Layer Control:

The ML model could adjust the maximum number of multi in multi out (MIMO) layers reported or outputted as UAI messages based on network conditions and user requirements.

More MIMO layers offer faster data transfer but consume more power.

The ML model can choose the optimal number of layers for the current scenario, balancing speed, and battery life and not only by checking battery levels of the UE 20.

### Overheating Mitigation:

The ML model can monitor temperature sensors (included in the operational conditions data) and reported or outputted as overheating UAI messages.

The network can then reduce power consumption or adjust traffic to prevent damage, ultimately extending battery life.

Whilst changing operating parameters manually can improved certain aspects of communications within the network, adapting operating parameters dynamically and more accurately provides additional benefits, which can grow over time

For different types of UE, adjusting operational parameters, as determined by the ML model, provides an optimised set of parameters. The ML model may also determine how often these operation parameters need to be updated, so that improved or optimal network conditions can match different circumstances.

As described previously, the ML model can provide data indicating the changes in operational parameters in the format of UE Assistance Information (UAI) messages. This can be particularly effective in managing and saving power. The output of the ML model may be a transmission of a single UAI or combination of UAls sent to the base station (gNodeB) 30. The ML model may be located and maintained within different network components. For example, when the ML is located within one or more UE, the data analysed and used by the ML model may be based on data that is collected by the same UE 20 without network involvement. Historical data from measurements obtained under a particular network configuration (e.g., idle and/or inactive measurements), or any other data available at the UE 20, base station 30, or the wider network may also be used to train or optimise the ML model.

There are several options for a location for generating and maintaining the ML model. These include but are not limited to:
a. Within the UE 20. In this case, the operational conditions may be more closely based on the environment and working conditions of the UE 20. Network data such as congestion, resource utilization, etc. may be included, provided there is a mechanism for exposing this to the UE 20.
b. Outside or external to the UE 20. This could be but may not necessarily be within the base station 30. In an example implementation, this could be within another network component such as an over the top (OTT) server, which can communicate with either or both the UE 20 (or UEs), the base station 30, and/or other parts of the network. This allows the ML model to be more easily built based on inputs from the UE(s) 20, the base station(s) 30, and/or the wider network.

With option a), the ML model may be lightweight, however suitable processing power and battery is required for the training, updating and generation of the ML model.

With option b), the ML model may include (e.g., be trained on or generated from) information defining communication flows between the UE 20 and the base station 30. The output of the ML model located external to the UE 20 could then be transferred to the UE 20 so that the UE 20 can implement the UEAssistancelnformation procedure (e.g., messaging with the base station 30, as shown in Figure 1). Alternatively, the server-based ML model may provide UEAssistancelnformation messages (containing the suggested set of operating parameters) directly to the base station 30.

The network may not always follow UE assistance information. Although the 3GPP standard does not mandate gNodeB behaviour, it is generally the case that a gNodeB will perform a corresponding action following the indication or receipt of UE assistance information. The UE 20 (or ML model) may transmit UE assistance information at different times. A UAI may be triggered by RRCReconfiguration through the IE OtherConfig. There may be a corresponding prohibition timer included in the RRCReconfiguration, where this timer specifies a minimum interval at which the base station (gNodeB) 30 allows the UE 20 to report the corresponding UAI. For example, the prohibition timer for Maximum-Bandwidth Reduction UAI is maxBW-PreferenceProhibitTimer-r16, the prohibition timer for Maximum number of MIMO layers is maxMIMO-LayerPreferenceProhibitTimer-r16.

The network can maintain different levels of control within the method 300 and system. These can include settings for periodicities, triggering methods, and thresholds and criteria for the UE 20 to transmit one or more UAI.

The UAI may be controlled on the device side (i.e., by the UE 20). For example, when the UE 20 determines that it should enter a battery saving mode, it may trigger a UAI and send to base station (gNodeB) 30, resulting in the gNodeB performing a corresponding action according to the UAI. The gNodeB can control the interval of the UE reporting UAI (i.e., transmitting UAI messages to the base station 30).

Data transfer to and from the UE 20 (or other host of the ML model) and gNodeB can includes key performance indicators (KPIs), measurement reports, part of the ML model or the whole ML model, and network related parameters. The following are some example KPIs and measurement reports that may be included:
RSRP/RSRPP/RSTD, RSTD, LOS/NLOS indicator, RSRPP, RS configurations, throughput, L1-RSRP, L1-SINR, BLER, hypothetical BLER, EVM, time stamps, cell ID, data quality indicator, SRS, CSI-RS, CSI reporting, precoding matrix, precoding matrix in spatial-frequency domain, precoding matrix represented using angular-delay domain projection, raw channel is in spatial-frequency domain, raw channel is in angular-delay domain, RI and CQI, historical performance data associated with the actions taken by the gNodeB upon receiving UE assistance information, resource utilization, congestion, battery consumption data, among others.

AI or ML techniques using in the method 300 and system may include deep learning, reinforced or unreinforced machine learning, neural networks, K-means clustering, regression analysis, and/or other suitable techniques, analyses, computations, etc.

The following provides example operating parameters that can be sent to the base station 30 to be applied to the UE 20 or allow the UE 20 to implement. These operating parameters may be sent to the base station 30 (from the ML model and/or from the UE 20) as UEAssistancelnformation messages, for example. Any one or more may be sent (e.g., within one message or as separate messages):
- its delay budget report carrying desired increment/decrement in the connected mode DRX cycle length;
- its overheating assistance information;
- its IDC assistance information;
- its preference on DRX parameters for power saving;
- its preference on the maximum aggregated bandwidth for power saving;
- its preference on the maximum number of secondary component carriers for power saving;
- its preference on the maximum number of MIMO layers for power saving; or
- its preference on the minimum scheduling offset for cross-slot scheduling for power saving;
- its preference on the RRC state;
- configured grant assistance information for NR sidelink communication;
- its preference in being provisioned with reference time information;
- its preference for FR2 UL gap;
- its preference to transition out of RRC_CONNECTED state for MUSIM operation;
- its preference on the MUSIM gaps;
- its preference on the MUSIM gap priority;
- its preference on keeping the colliding MUSIM gaps;
- its preference on the MUSIM temporary capability restriction;
- its relaxation state for RLM measurements;
- its relaxation state for BFD measurements;
- availability of data and/or signaling mapped to radio bearers which are not configured for SDT;
- its preference for the SCG to be deactivated;
- availability of uplink data to transmit for a DRB for which there is no MCG RLC bearer while the SCG is deactivated;
- change of its fulfilment status for RRM measurement relaxation criterion;
- service link (specified in TS 38.300 [2]) propagation delay difference between serving cell and neighbour cell(s);
- its preference on multi-Rx operation for FR2;
- availability of flight path information for Aerial UE operation;
- UL traffic information;
- the information of the relay UE(s) with which it connects via a non-3GPP connection for MP; and/or
- configured grant assistance information for NR sidelink positioning.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, only one UE is shown in the figures but there may be a plurality of UEs served by the same or different base stations. Only one base station is shown in the figures but there may be a plurality of base stations in the network serving a plurality of U Es.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for managing communications between user equipment, UE, and a base station, the method comprising the steps of:
obtaining data describing operational conditions during communications between the UE and the base station;
a machine learning, ML, model generating a set of one or more suggested changes in operating parameters between the UE and the base station based on the data describing the operational conditions;
the base station receiving data describing the set of suggested changes in operating parameters; and
the base station implementing at least one of the set of suggested changes in operating parameters by configuring the UE according to the at least one of the set of suggested changes in operating parameters.

2. The method of claim 1, wherein the at least one of the set of suggested changes in operating parameters is sent to the base station as one or more UEAssistancelnformation message.

3. The method of claim 1 of claim 2 further comprising the steps of:
before the at least one of the set of suggested changes in operating parameters is sent to the base station the base station sending the UE a request for UE capability information; and
the UE responding to the request with a response indicating capabilities of the UE, wherein the capability information includes one or more capabilities of the UE to alter the operating parameters.

4. The method according to any previous claim,
wherein the step of the base station implementing the at least one of the suggested set of changes in operating parameters further comprises the step of the base station sending the UE a radio resource control, RRC, message describing the at least one of the set of suggested changes in operating parameters, and/or
wherein the at least one of the set of suggested changes in operating parameters includes any one or more of: number of multi input multi output, MIMO, layers; and the number of UE receivers in operation.

5. The method according to any previous claim, wherein the data describing the operational conditions include any one or more of: radio performance, screen use, user behaviour, mobile application executing, traffic pattern, CPU usage, memory usage, call information, and streaming data type.

6. The method according to any previous claim, wherein the set of suggested changes in operating parameters is sent to the base station in response to the ML model determining that a change is required.

7. The method according to any previous claim further comprising the step of:
updating the ML model by providing the at least one of the set of suggested changes in operating parameters to the ML model and further operational conditions after the base station implements the at least one of the set of suggested changes in operating parameters.

8. The method according to any previous claim further comprising the step of iterating the steps of:
obtaining the data describing the operational conditions, the ML model generating the set of suggested changes in operating parameters, the base station receiving data describing the set of suggested changes in the operating parameters, and the base station implementing the at least one of the set of suggested changes in operating parameters.

9. The method according to any previous claim, wherein
the ML model is stored and/or updated within the UE; or
the ML model is stored and/or updated in a server external to the UE.

10. The method of claim 9, wherein the UE or the server external to the UE obtain the data describing the operational conditions.

11. The method according to any previous claim, wherein the ML model is any one of: deep learning, reinforced or unreinforced machine learning, neural network, K-means clustering, or regression analysis.

12. User equipment, UE, comprising:
a processor; and
memory storing computer-executable instructions that, when executed by the processor, cause the UE to:
obtain data describing operational conditions during communications between the UE and a base station;
send the data to a machine learning, ML, model to generate a set of one or more suggested changes in operating parameters between the UE and the base station based on the data describing the operational conditions;
sending the set of suggested changes in operating parameters to the base station; and
receiving from the base station a message configuring the UE according to the at least one of the set of suggested changes in operating parameters.

13. A server comprising:
a processor; and
memory storing computer-executable instructions that, when executed by the processor, cause the server to:
receive data describing operational conditions during communications between user equipment, UE, and a base station;
use a machine learning, ML, model to generate a set of one or more suggested change in operating parameters between the UE and the base station based on the data describing the operational conditions; and
send data to the base station describing the set of suggested changes in the operating parameters.

14. The server of claim 13, wherein the computer-executable instructions further cause the processor to:
update the ML model by providing the at least one of the set of suggested changes in operating parameters to the ML model and further operational conditions after the base station implements the at least one of the set of suggested changes in operating parameters.

15. A telecommunications system comprising:
a base station; and
one or more UE of claim 12 and/or the server of claim 13 or claim 14.
